# EUROPEAN PATENT APPLICATION

(11) **EP 2 520 544 A1**
(43) Date of publication of application: **07.11.2012**
(21) Application number: 11164409.2
(22) Date of filing: 02.05.2011
(51) Int. Cl.: C01B 31/00

(54) **Process for the preparation of carbon-containing material, material obtainable thereby and uses thereof**

(71) Applicant: Max-Planck-Gesellschaft zur Förderung der Wissenschaften e.V., 80539 München (DE)
(72) Inventor: Antonietti, Markus, Prof. Dr., 14558 OT Nuthetal/Rehbrücke (DE); Titirici, Maria-Magdalena, Dr., 10435 Berlin (DE); Fellinger, Tim-Patrick, 10627 Berlin (DE); White, Robin, J., Dr., 10719 Berlin (DE)
(74) Representative: HOFFMANN EITLE

(57) **Abstract**

The present invention relates to a process for the preparation of carbon-containing material. Owing to the similarity to gels known from conventional sol-gel silicate chemistry, the materials can be denoted as "Carbogels". The process involves the step of heating a reaction mixture comprising an aqueous liquid and, dissolved therein, carbohydrate and a boron compound. The boron compound is selected from boric acid, derivatives thereof and salts thereof. Through the preparation process of the invention, solvogels, such as hydrogels and ionogels, can be obtained in a simple one-step hydrothermal procedure. By removing the liquid from the solvogel, carbon-based aerogels can be obtained. The invention is also concerned with the Carbogels obtainable by the preparation process as such, as well as their uses, for instance in catalysis, electrochemical applications, soil applications, sorption and chromatography.

## Description

### FIELD OF THE INVENTION

The present invention relates to a process for the preparation of carbon-containing material. The process allows the facile synthesis of pure carbon materials with high specific surface areas. The material can be obtained as a solvogel, in particular a hydrogel or ionogel, preferably in the form of a monolith. By removing the liquid phase from the solvogel, the carbon-containing material can be obtained as a, preferably monolithic, aerogel. Overall, the carbon-containing material of the invention resembles corresponding gels known from conventional sol-gel silicate chemistry. Therefore, the carbon-containing material(s) will also be referred to as a "Carbogel" or "Carbogels" in this application. According to another aspect, the present invention is concerned with the carbon-containing material obtainable by the preparation process of the invention, as well as specific uses thereof.

### BACKGROUND OF THE INVENTION

Today aerogels are known in a great variety of compositions and are used in a manifold of applications like chromatography, separation, gas storage, detectors, heat insulation, as supports and ion exchange materials. Silica aerogels are the most prominent and developed materials in this field.

In 1987 Pekala et al. described for the first time organic aerogels as an interesting alternative. The most examined organic aerogels are based on resorcinol-formaldehyde (RF) mixtures. Here the formation of the gel phase occurs through the catalyzed polycondensation of the reactive precursors from water (see e.g. R. W. Pekala, Journal of Materials Science 1989, 24, 3221-3227). Apart from being highly porous and lightweight, another advantage of organic aerogels is the possibility to achieve conductivity by converting them into carbon aerogels, opening the field for electrical or electrochemical applications like batteries, supercapacitors and as conductive supports. To convert organic into carbon aerogels, usually pyrolysis above 500 °C is employed. The carbonization process leads to a loss of oxygen and hydrogen functionalities and therefore higher carbon content and more condensed carbon chemistry. A review article on RF-based organic and carbon aerogels was published by Al-Muhtaseb et al. (S. A. Al-Muhtaseb, J. A. Ritter, Advanced Materials 2003, 15, 101-114).

However, RF-based organic and carbon aerogels have certain downsides, e.g. the restricted chemical variability of RF resins, and also the fact that resorcinol is harmful and dangerous to the environment and formaldehyde is toxic.

To avoid these drawbacks, various synthetic pathways to porous carbons starting out from non-toxic starting compounds have been explored.

One approach is the hard template route, occasionally also referred to as "nanocasting". A.H. Lu and F. Schüth in Advanced Materials 2006, 18, 1793-1805 provide an overview of the concept of nanocasting, e.g. for the preparation of ordered mesoporous carbons. Generally speaking, the nanocasting method involves the impregnation of a mesoporous silica template having a specific structure with a carbon precursor, followed by polymerization and carbonization of the precursor in the pore system to result in a carbon-silica composite. Finally, the silica template is removed by leaching to obtain the replica mesoporous carbon. Amongst many others, sucrose and mesophase pitch (Y.S. Hu, P. Adelhelm, B.M. Smarsly, S. Hore, M. Antonietti and J. Maier, Advanced Functional Materials 2007, 17, 1873-1878) were found to be suitable carbon precursors. Whilst offering different mesoscopic textural phases, the surfaces of such materials are difficult to chemically post-modify, and processing is energy, resource and step intensive.

Another synthetic approach to porous carbons is the so-called Starbon^{®} carbonaceous material technology. According to the definition provided in WO 2007/104798, Starbons^{®} represent a new family of carbonaceous materials derived from high surface area polysaccharides. V. Budarin, J.H. Clark, J.J.E. Hardy, R. Luque, K. Milkowski, S.J. Tavener and A.J. Wilson in Angewandte Chemie - International Edition 2006, 45, 3782-3786 describe the preparation of Starbon^{®} materials using starch as the precursor. In more detail, the process is as follows. First, a simple process of gelatization in water opens up and disorders the dense network of starch, after which it partially recrystallizes during a process of retrogradation. Exchanging water with a lower-surface-tension solvent (usually ethanol) prevents collapse of the network structure during the drying process. After drying, the expanded mesoporous starch is obtained. In the final stage of the process, mesoporous starch is doped with a catalytic amount of organic acid (*e.g.* p-toluenesulfonic acid) and heated under vacuum. This enables fast carbonization and fixing of the mesoporous structure. The synthesis of Starbons^{®} is also summarized by J. H. Clark in Green Chemistry 2006, 8, 17-21. Starbons^{®} have been derivatized with sulfuric acid to result in starbon acids (V.L. Budarin, R. Luque, D.J. Macquarrie and J.H. Clark, Chemistry - A European Journal 2007, 13, 6914-6919) . Further generations of starbon materials have used pectin (R.J. White, V.L. Budarin and J.H. Clark, Chemistry - A European Journal 2010, 16, 1326-1335) and alginic acid (R.J. White, C. Antonio, V.L. Budarin, E. Bergstrom, J. Thomas-Oates and J.H. Clark, Advanced Functional Materials, 2010, 20, 1834-1841) in place of starch as starting compounds. The various types of starbons are occasionally also collectively referred to as "porous polysaccharide-derived materials (PPDM)". R.J. White, V. Budarin, R. Luque, J.H. Clark and D.J. Macquarrie in Chemical Society Reviews 2009, 38, 3401-4318 provide an overview of porous carbonaceous materials from renewable resources.

Recently, the hydrothermal carbonisation (HTC) of biomass, first described by Bergius as early as in 1913, has seen a renaissance. HTC is a technique which allows the conversion of biomass into carbonaceous products via simple hydrothermal treatment under relatively ambient temperatures (*e.g.* 130°C - 300°C) and short time scales (*e.g.* > 30 min). Two recent reviews (B. Hu, K. Wang, L.H. Wu, S.H. Yu, M. Antonietti and M.M Titirici, Advanced Materials 2010, 22, 813-828; and M.M. Titirici and M. Antonietti, Chemical Society Reviews 2010, 39, 103-116) illustrate that diverse nanostructures are accessible via HTC. For instance, X. Cui, M. Antonietti and S. H. Yu, in Small 2006, 2, 756-759 found that iron ions (added in the form of Fe(NH₄)₂(SO₄)₂) and iron oxide nanoparticles can effectively catalyze the hydrothermal carbonization of starch and rice grains under mild conditions (≤ 200°C) and have a significant influence on the formation of carbon nanomaterials with different shapes.

Furthermore, N. Baccile, M. Antonietti and M.-M. Titirici in ChemSusChem 2010, 3, 246 - 253 describe the hydrothermal synthesis of nitrogen-doped nanocarbons. They found that the hydrothermal treatment of glucose in the presence of model proteins, such as egg white ovalbumin will lead to carbonaceous nanoparticles or continuous nanosponges. The materials were obtained as black solid flake-like powders.

All materials exhibited a continuous nanometer-scale sponge-like network structure made up primarily from particles ranging between 10 - 40 nm. After tempering under an inert gas (N₂), the samples were found to have "carbon foam" morphology. The ovalbumin was found to be covalently integrated into the structure through Maillard reaction, thus efficiently introducing nitrogen functions into the carbonaceous scaffold.

So far, carbon aerogels, in particular those representing, like the conventional hydrothermal coals, a CHO material (i.e. substantially consisting of carbon, hydrogen and oxygen only) prepared from renewable sources, as well as the corresponding solvogels, such as hydrogels, were not yet available.

### SUMMARY OF THE INVENTION

The present inventors have now surprisingly found that such a remarkable carbon-containing material resembling gels known from conventional sol-gel silicate chemistry can be prepared from renewable sources, namely water and carbohydrate, in the presence of a specific boron compound, in a straightforward way. In other words, the inventive finding resides in that the addition of specific boron compounds can direct hydrothermal carbonization towards formation of gels with structural features very similar to the corresponding structures known from silica sol-gel chemistry. As a result of the preparation process, the Carbogels of the invention are preferably carbon-based.

The process is as recited in Claim 1. The preamble reflects conventional hydrothermal carbonization (HTC) processes involving the step of heating a reaction mixture comprising an aqueous liquid and carbohydrate dissolved therein. In the process according to the present invention, the reaction mixture to be heated comprises an aqueous liquid and both, carbohydrate and the specific boron compound(s), dissolved in the aqueous liquid. The specific boron compound is selected from boric acid, boric acid derivatives and boric acid salts. For simplicity, the process for the preparation of carbon material as claimed in Claim 1 will occasionally be termed "preparation process of the invention" in this application, and the specific boron compound selected from boric acid, derivatives thereof and salts thereof, as "boron compound".

Preferred embodiments of the preparation process of the invention are subject of the dependent claims.

According to another aspect, the present invention relates to a carbon-containing material, obtainable by the preparation process of the invention. As mentioned initially, the material(s) can also be termed "Carbogel" or "Carbogels". As will be further illustrated below, the Carbogel can be a solvogel, such as a hydrogel or ionogel, or an aerogel.

Furthermore, a use of the Carbogels in catalysis, electrochemical applications, soil applications, sorption and chromatography is also covered by the appended claim set.

### BRIEF DESCRIPTION OF THE DRAWINGS

Fig. 1 provides a schematic overview of the preparation process of the invention. It is illustrated that the hydrothermal carbonisation reaction (involving glucose, a borate and water, H₂O) can be carried out in an autoclave, for instance at 180 °C to 200 °C for 4 to 20 hours. The right image in Fig, 1 shows from left to right the autoclave (without lid), the autoclave liner, the quartz tube and the black Carbogel (hydrogel) monolith taken out from the quartz tube after the reaction.
Fig. 2 is a photograph showing black monolithic Carbogels (hydrogels) obtained with differing concentrations of borax. Namely, 20 mL 30% glucose aqueous solution, and, dissolved therein, 100 mg (I), 250 mg (II), 500 mg (III), 750 mg (IV) and 1000 mg (V) borax were hydrothermally treated each in an autoclave at 200 °C for 10 h to give the Carbogels I to V. The photograph further shows the autoclave quartz tube (left) and, to give an impression of the size of the monoliths, a 2 Euro coin (right).
In Fig. 3 ATR FT-IR (Attenuated Total Reflectance Fourier Transform Infrared) spectra of a classical hydrothermal coal (grey curve) and a representative Carbogel (black curve) are shown.
Fig. 4 provides TEM images of as-made and heat-treated Carbogels as prepared in Examples 1 to 3.
Fig. 5 shows the results of nitrogen sorption analysis of the as-made and heat-treated Carbogels as obtained in Examples 1 to 3.
Fig. 6 provides an overview of the key steps of the preparation process of the invention and the carbon-containing materials obtained thereby.

### DETAILED DESCRIPTION OF THE INVENTION

The preparation process of the invention involves the step of heating a reaction mixture comprising an aqueous liquid and, dissolved in the aqueous liquid, carbohydrate and the boron compound. This step is occasionally referred to as step (i) in the present application.

The aqueous liquid comprises water, and, optionally, non-aqueous liquids, preferably in amounts miscible with water. According to a preferred embodiment, the reaction mixture comprises only a single liquid phase, namely the aqueous liquid. For instance and without limitation, to form the aqueous liquid, ethanol, *e.g.* resulting from the fermentation of biomass, and ionic liquids may be present together with water in the aqueous liquid.

In step (i) the reaction mixture comprising water (as part of the aqueous liquid) is heated to yield a carbon-containing material. As such, step (i) can also be referred to as a "hydrothermal treatment step". Also, the carbon-containing material preferably constitutes a carbonized material. Therefore, step (i) can preferably be denoted as a hydrothermal carbonization step. By virtue of the presence of water (in the aqueous liquid) in step (i), the preparation process of the invention is distinguished from e.g. pyrolytic processes, for the conversion of biomass, to give coal-like material (typically in the absence of oxygen).

"Carbohydrate" as used herein is understood in the common way to mean polyhydroxyaldehydes (aldoses) and polyhydroxyketones (ketoses), as well as higher molecular compounds, which can be converted by hydrolysis to such compounds. In particular, carbohydrates are to encompass mono-, di-, tri-, oligo- and polysaccharides. Herein, a carbohydrate comprising 10 or more monosaccharide units is referred to as a polysaccharide. Optionally, the carbohydrate for use in the present invention is substituted, *e.g.* with groups containing atoms other than carbon, hydrogen and oxygen. If so desired, hetero atoms can be incorporated in the carbon-containing material by using at least in part such substituted carbohydrates.

The amount of carbohydrate dissolved in the aqueous liquid, in other words the concentration of carbohydrate in the aqueous solution is preferably above a certain concentration, for instance > 10 wt.-% to ensure a most efficient formation of carbon-containing material in the preparation process of the invention.

The boron compound for use in the invention is selected from the group consisting of boric acid, derivatives of boric acid and salts of boric acid.

Boric acid has the formula B(OH)₃.

Derivatives of boric acid as meant herein encompass boronic acids, borinic acids and esters of boric acid. Esters of boric acid have the general formula B(OR)₃, wherein the groups R are independently selected from aryl and/or alkyl groups, for instance C₆₋₁₀ aryl and/or C₁₋₁₀ alkyl groups. Boronic acids have the general formula R-B(OH)₂, wherein R has the same meaning as defined above for esters of boric acid. Borinic acids are represented by the formula R₂-B(OH), with the two groups R independently selected from aryl and alkyl groups as further specified above.

The salts of boric acid can also be referred to as "borates". Like the derivatives of boric acid, the borates for use in the preparation process of the invention are not specifically limited in kind as long as they can be dissolved in the aqueous liquid. According to a preferred embodiment, the solubility of the boron compound in the aqueous liquid is at least 100 g/1, more preferably at least 600 g/l in the aqueous liquid.

Owing to their solubility and availability, the boron compound for use in the present invention is preferably an alkali metal borate, and more preferably, it is borax. Borax, disodium tetraborate, is represented by the general formula Na₂B₄O₇·10H₂O.

According to a preferred embodiment of the preparation process of the invention, the boron compound is an alkali metal borate and the carbohydrate is a monosaccharide. Still more preferred, the boron compound is borax and the carbohydrate is a monosaccharide.

As the inventors found, the boron compound, such as borax, acts as a catalyst in the dehydration of the carbohydrate. Therefore, the amounts of the boron compound in terms of carbohydrate can be as low as 1 : 1,000 by weight in the aqueous liquid. For very high concentrations of the boron compound, such as borax, with respect to carbohydrate, such as 0.6 : 1 by weight, a carbon-containing material is obtained in the preparation process of the invention, which is a dispersion of very small carbon-containing particles, having a particle size of e.g. 5 nm. Therefore, the ratio of boron compound to carbohydrate is preferably from 1 : 1,000 to 0.5 : 1 by weight in the aqueous liquid.

Further ingredients may be present in the reaction mixture to be heated in step (i) in the preparation process of the invention, as long as they do not inhibit the formation of the carbon-containing material.

For instance, the further ingredients may be those occurring in biomass, which can be used as a source of carbohydrate in the present invention with particular benefit.

The term "biomass" as used herein is broadly understood as encompassing all kinds of plant and animal material and material derived from the same. According to a preferred embodiment, the biomass for use in the present invention is plant biomass. For instance, the plant biomass may be agricultural plant material (e.g. agricultural wastes) or all kinds of wood material. In another preferred embodiment, the biomass, such as plant biomass, comprises more than 40 wt%, preferably more than 70 wt%, most preferably > 90 wt%, of carbohydrate in terms of the solid contents of the biomass.

The reaction temperature in the hydrothermal treatment step (i) is preferably ≤ 300 °C, more preferably 130 to 300 °C, still more preferably 100 to 250 °C and most preferably 180 to 220 °C. For the purpose of this specification, the reaction temperature is meant to refer to the temperature, more specifically the average temperature, inside the reaction mixture, which can be measured with a thermocouple. Consequently, it is readily possible to control the reaction temperature to lie within the desired range by heating or cooling the reactor, as appropriate.

The hydrothermal treatment in the preparation process of the present invention is preferably carried out in a pressure resistant reactor, *e.g.* an autoclave or an extruder. Due to the water in the reaction mixture, there will be a pressure increase upon heating. As the hydrothermal carbonization reaction is exothermic, external heating may no longer be necessary, once the reaction has started, provided the thermal insulation of the reactor or reactors is sufficient.

As mentioned above, according to a preferred embodiment, biomass is used as the source of carbohydrate in the preparation process of the invention. Biomass, in particular plant biomass, typically contains significant amounts of polysaccharides such as cellulose and starch. Some types of biomass, *e.g.* sugar cane, sugar beet and fruit, additionally contain mono- and disaccharides. To dissolve the polysaccarides, in particular cellulose, in an aqueous liquid, it proved beneficial to incorporate an ionic liquid in the aqueous liquid. Accordingly, the ionic liquids for use in the preparation process of the invention are preferably capable of dissolving polysaccharides including cellulose.

An ionic liquid is a salt in the liquid state. Commonly used cations in the ionic liquids are imidazolium, ammonium and pyridinium, and commonly used anions are halogenides, carboxylates, phosphonates and phosphates. Cellulose has a particularly high solubility in ionic solvents having the following cations and anions, respectively, which are therefore used as ionic liquids in the preparation process of the invention with particular preference.

### Cations:

Imidazolium:

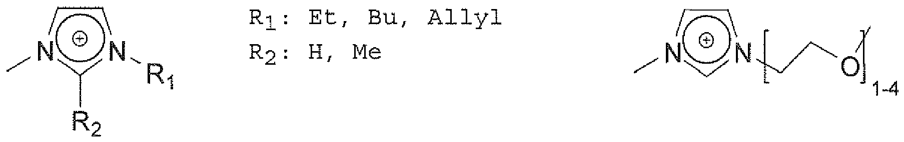

Ammonium:

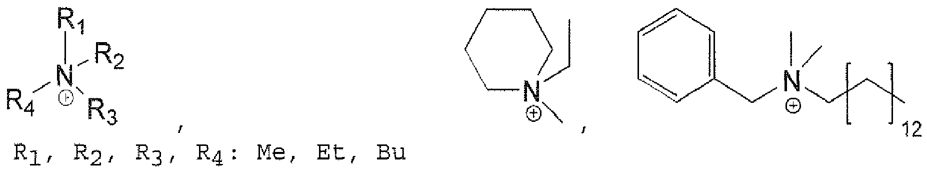

Pyridinium:

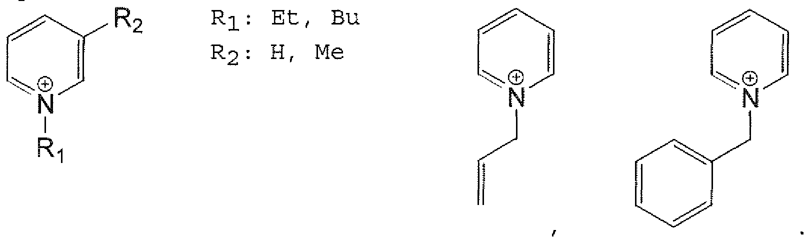

In the above formulae, H represents hydrogen, Me methyl, Et ethyl and Bu butyl.

Anions:

| | |
|---|---|
| Halogenide: | Cl⁻, Br⁻ |
| Carboxylate: | HCOO⁻, CH₃COO⁻ |
| Phosphonate: | (AlkylO)(H)PO₂⁻ |
| Phosphate: | (AlkylO)₂PO₂⁻ |

When using an aqueous liquid comprising an ionic liquid capable of dissolving polysaccharides, in particular cellulose, the preparation process of the invention can be carried out using biomass, in particular plant biomass, in the following way. The aqueous liquid comprising ionic liquid and optionally boron compound is added to biomass to dissolve the polysaccarides, in particular cellulose, present therein, and boron compound is optionally further dissolved in the resultant aqueous liquid. Since water is merely acting as a catalyst in the hydrothermal carbonization step (i), it is sufficient for the aqueous liquid comprising ionic liquid to comprise very low water concentrations such as in the ppm range, in terms of the overall weight of the aqueous liquid.

As will be appreciated, to facilitate the dissolution of the cellulose (and further carbohydrates) in the aqueous liquid comprising ionic liquid, the biomass is preferably used in comminute, in particular shredded form. The aqueous liquid may in this case comprise, apart from water and ionic liquid, ethanol produced by fermentation of the biomass.

Biomass, in particular plant biomass, typically contains further components such as lignin(s) or silicate(s). Being insoluble in an aqueous liquid comprising an ionic liquid, they form part of the reaction mixture heated in step (i) and will as such be incorporated as insoluble solid domains into the carbon-containing material, i.e. Carbogel.

The water being present in the reaction mixture may be water adhering or bound to the original biomass, which can also be referred to as "raw" biomass. The water content of raw biomass may for instance be up to 80 wt%. As will be appreciated, the raw biomass can be used as such and with water contents as mentioned above without drying.

In addition to the water that is possibly present in, e.g. bound to, the raw biomass such as obtained from natural sources, water may be added to adjust the water content in the aqueous liquid.

Though unnecessary, acids may be present in the aqueous liquid so as to adjust the pH to the acidic range, such as 3 to 7, preferably 4 to 6. As it turned out, by adjusting the pH to the acidic range, the yield of carbon-containing material can be increased.

The acid that may be present in the aqueous liquid in the preparation process of the invention is preferably a strong acid, e.g. having a pKₐ of less than 4.5. Both, inorganic acids, e.g. mineral acids, and organic acids can be used. An example of a suitable mineral acid is phosphoric acid. Citric acid, lactic acid and pyruvic acid are examples of (strong) organic acids.

According to another embodiment, the carbohydrate as such has a high solubility in water. This applies for instance to glucose and fructose. In this case, the aqueous liquid preferably contains water as a single solvent, with other solvents such as ethanol only incidentally brought in by the biomass, e.g. by fermentation. Preferably at least 80 wt%, more preferably at least 90 wt% of the aqueous liquid is water in this embodiment.

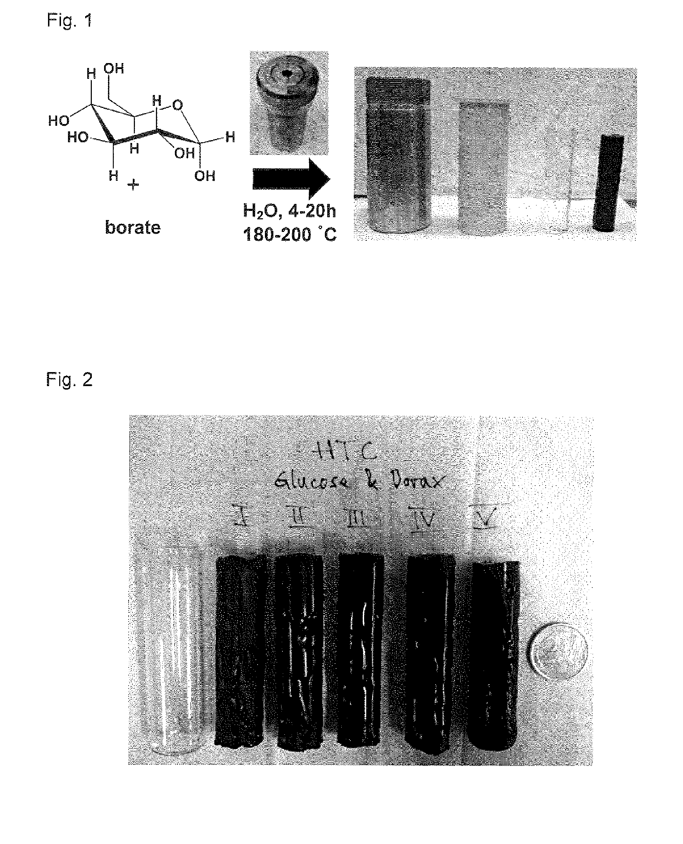

When all components present in the reaction mixture to be heated in the preparation process of the invention are soluble in the aqueous liquid, i.e. the reaction mixture is an aqueous solution of carbohydrate and boron compound, pure Carbogel without incorporated solid domains will be formed. Such products (in monolithic form) are shown in Fig. 2.

There is no specific limitation as to the duration of step (i) in the preparation process of the invention. For instance, the process can be carried out at short time scales such as more than 30 min. According to a preferred embodiment, step (i) is carried out until the whole contents of the reaction mixture including the aqueous liquid have solidified. When the reaction is carried out in a reaction vessel, such as an autoclave, this is the point in time when the whole reaction mixture has gelled to give a solidified product, which preferably has the shape of the reaction vessel. This is shown in Fig. 2 for a quartz tube acting as a reaction vessel (within an autoclave).

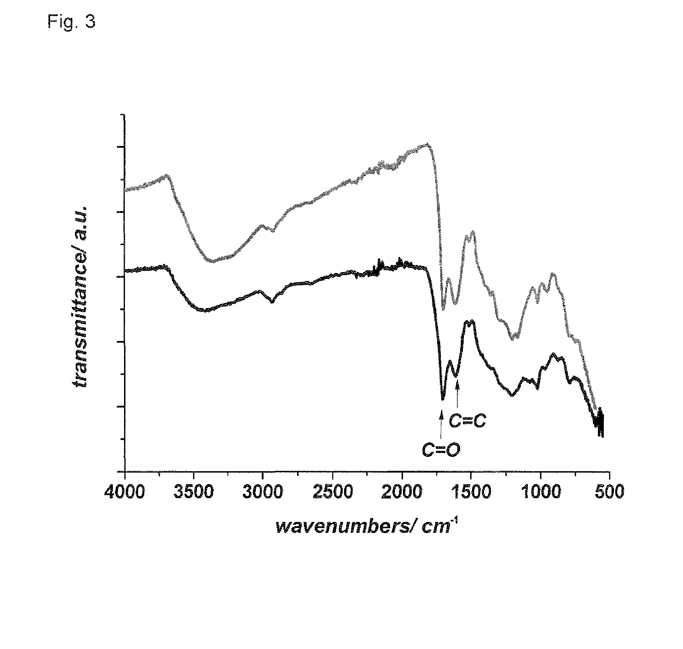

Without being bound by theory, the function of the boron compound in the preparation process of the invention appears to be manifold. Presumably, it acts as a dehydration catalyst in the hydrothermal carbonization reaction, stabilizes the carbon-containing particles and enhances the cross linking reaction between the particles (and hence gelation). The enhanced cross linking reaction in comparison to conventional hydrothermal carbonization is reflected by the increased intensity of the C=O band (about 1,700 cm⁻¹) that is characteristic for cross linking due to aldol condensation. See Fig. 3.

The carbon-containing material obtained or obtainable in the hydrothermal carbonisation step (i) is typically composed of interconnected nanoparticles forming the dispersed phase, with the aqueous liquid forming the dispersing phase. As such, it can be referred to as a solvogel. When the aqueous liquid is water, the carbon-containing material obtained in step (i) can be termed a hydrogel. In embodiments of the preparation process of the invention where the aqueous liquid predominantly consists of an ionic liquid, the Carbogel product obtained in step (i) can be called an ionogel. Accordingly, a hydrogel is regarded herein as a special type of solvogel, wherein the liquid of the dispersing phase is water.

Through the preparation process of the invention, solvogels can be obtained in a simple one-step hydrothermal procedure. The process is highly carbon efficient with respect to the carbohydrate precursors. Similar to the well-established sol-gel chemistry, where colloidal particles form at first and then condense together, the preparation process of the invention is a "bottom up" synthetic process.

The carbon-containing material obtained or obtainable in step (i), which is preferably a solidified, especially a monolithic product, comprises aggregated carbon-containing particles with a significantly decreased size as compared to usual hydrothermal carbon (i.e. carbon obtained by conventional hydrothermal carbonization, HTC). Specifically, the particle size can be below 100 nm. Apart from the smaller particle size, the particle size distribution is narrower than in conventional hydrothermal carbon materials. While being predominantly mesoporous, the porosity of the carbon-containing material is composed of contributions from microporous (pores < 2 nm), mesoporous (pores of 2 - 50 nm) and macroporous (pores > 50 nm) domains. Such structure is occasionally referred to as a hierarchical pore structure herein.

Moreover, as opposed to conventional activated carbons (*e.g.* those produced by pyrolysis), the oxygen content typically exceeds 25% for the carbon-containing materials directly obtained in the hydrothermal carbonization step (i). In addition, the surface of the carbon-containing material of the invention as obtained in step (i) is very hydrophilic.

The Carbogels of the invention can be easily prepared as monoliths, e.g. by carrying out step (i) until solidification of the entire reaction mixture. As understood herein, a "monolith" means a self-supporting single-piece body. As will be understood, depending on the aqueous liquid used in step (i), a hydrogel (aqueous liquid = predominantly water), ionogel (aqueous liquid = predominantly ionic liquid) or other solvogel (aqueous liquid = predominantly non-aqueous liquid) will be obtained.

The ionogels obtainable by the preparation process of the present invention can be pictured as two interpenetrating continuous networks of carbon-containing material and ionic liquid intermingled at the nanometer scale. As such they offer a combination of the mechanical strength of a gel and the properties of an ionic liquid. They are quite stable in polar organic solvents, such as toluene or alkanes. The ionogels of the present invention based on carbon are ion- and electron-conductive, which is different from most sol-gel derived materials, which are electronic insulators with low charge-transfer efficiency and substrate diffusion. Owing to their high conductivity, the ionogels can be expected to be of interest for electrochemical applications.

The ionogels of the invention combine the chemical versatility of ionic liquids with the shaping versatility of gels, thus opening up a new way to design conducting materials for electrochemical devices, such as batteries, fuel cells, electrochromic windows or photovoltaic cells.

In the ionogels of the invention, the ionic liquid is like a supported ionic liquid phase (SILP) for applications in catalysis. In fact, the layer of free ionic liquid in the ionogel (the thickness of which layer is close to the diffusion layer) was shown to act as a reaction phase able to dissolve various homogeneous catalysts.

The solvogels of the present invention can be used in flow reactors with the gel being directly synthesized within the column-like reactor. In the reactor, the solvogel can act per *se* as the catalyst, e.g. when it contains nitrogen brought in by substituted carbohydrates. In the alternative, the solvogels can be used as catalyst carriers. As regards applications in sorption and chromatography, the solvogel can be directly produced in HPLC (High Pressure Liquid Chromatography) tubes.

In the preparation process of the invention, the aqueous liquid in the solvogel obtained in the hydrothermal carbonization step (i) can be replaced in a subsequent step (ii) with a different liquid. The different liquid is preferably a non-aqueous liquid. For instance, the non-aqueous liquid can be an ionic liquid. In the alternative, it can be a non-aqueous organic liquid, such as ethanol or acetone, which can be removed very easily to yield an aerogel. By such liquid replacement (sometimes also called "solvent replacement" herein), a solvogel, e.g. hydrogel, obtained in step (i) can be easily converted to another type of solvogel, including an ionogel. There are no specific restrictions as to how the solvent replacement is done. For instance, it can be accomplished by extraction of the aqueous liquid present in the as-made Carbogel with the replacement solvent, for instance in a Soxhlet extractor. In this specification, the Carbogel obtained in step (i) is also referred to as "as-made".

Subsequent to the optional replacement of the aqueous liquid present in the pores of the as-made Carbogel, the aqueous and/or non-aqueous liquid that is present in the pore system of the solvogel can be removed. This step is occasionally also termed "solvent removal" herein. Without limitation, the solvent removal can be achieved by evaporative drying, supercritical drying, squeezing out and extraction by suction. As mentioned before, the as-made Carbogel preferably is a solidified product, especially a monolith. The structure of the carbon-containing material of the invention proved to be most stable against collapse of the pore system upon solvent removal. Nevertheless, when removing the liquid from the solvogel, the pore system may, depending on the solvent removal method, not always be maintained, *e.g.* when the liquid is removed by squeezing out. This being the case, evaporative drying and especially supercritical drying proved to be preferred to maintain the pore system. According to an especially preferred embodiment, the liquid is removed by extraction with supercritical CO₂. For this method, the pore liquid in the solvogel is preferably selected from ethanol or acetone (e.g. brought in by solvent replacement with ethanol or acetone).

While conventionally gels with a collapsed pore system were denoted "xerogels" and those with a maintained pore system (e.g. obtained by supercritical drying) as aerogels, the carbon-containing materials of the invention, in which the dispersing phase is a gas (as opposed to a liquid like in the solvogels) will collectively be termed "aerogels" herein. Adhering to this terminology, the carbon-containing material obtainable by solvent removal from the solvogel will generally be referred to as an aerogel herein. Specifically, the carbon-containing material obtained directly after the solvent (liquid) removal from the solvogel is termed "as-made aerogel" in this specification.

Aerogels obtainable by the preparation method of the invention with an intact pore system, that is achievable e.g. by way of removing the pore liquid by supercritical drying, can have a density as low and a specific area as high as aerogels accessible via conventional sol-gel silicate chemistry. For instance, the density can be in the range of 0.001 - 0.5 g/cm³ and the specific surface area up to 400 m²/g, for instance up to 300 m²/g. In this specification, the specific surface area is generally determined by way of the Brunauer-Emmet-Teller (BET) method using nitrogen as an adsorbent.

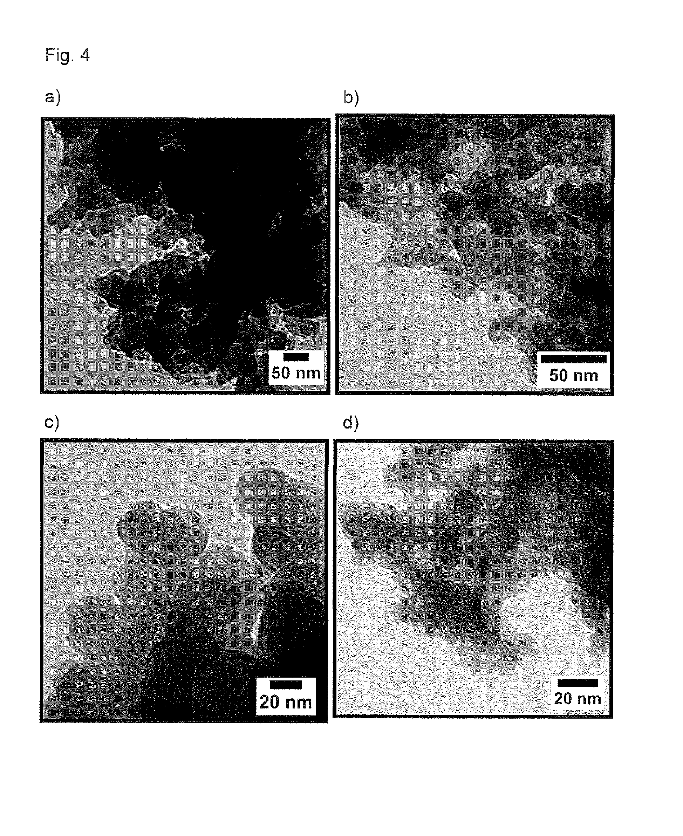

Scanning electron microscopy (SEM) and transmission electron microscopy (TEM) (see Fig. 4) images reveal that the network of the aerogels obtainable by the preparation method of the invention is composed of monodisperse, aggregated, spherical nanoparticles generating a hierarchical pore structure, which is highly desirable for application in catalysis, electrochemical applications (*e.g.* electrocatalysis, batteries and supercapacitors) or chromatography, where mass transport through the pore system plays a crucial role.

As the present inventors found, the micro- and nanostructure of the Carbogels, in particular the aerogels can be easily adjusted by modifying the conditions in the hydrothermal carbonization step (i). For instance, the size of nanoparticles in the Carbogel (as measured by TEM) was shown to decrease with increasing ratio of boron compound, in particular borax, to carbohydrate (ratio in terms of weight). Furthermore, the (weight) ratio of carbohydrate to aqueous liquid in the reaction mixture influences the specific surface area and porosity of the obtained aerogels.

In the preparation process of the invention it is possible to extract, *e.g.* prior to step (ii) involving the optional solvent replacement and the subsequent solvent removal, soluble compounds not incorporated into the gel structure by suitable washing steps, *e.g.* with water or ethanol. As the boron compound is not bound to the final product, it can be easily washed out to be recycled for the next Carbogel production.

In the preparation process of the invention, the liquid removal in step (ii) to give an aerogel may be followed by a heat treatment step (iii). In the heat treatment step, the aerogel is preferably treated at a temperature of ≥ 300 °C. The maximal heat treatment temperature can be as high as 1,500 °C. The heat treatment is preferably carried out in a non-oxidizing atmosphere, for example in an inert gas such as nitrogen or argon. According to a particularly preferred embodiment, the heat treatment is carried out in a non-oxidizing atmosphere at a temperature of ≥ 300 °C. The Carbogels obtainable by the preparation process of the invention including the heat-treatment step (iii) will be denoted as "carbonized aerogels" herein.

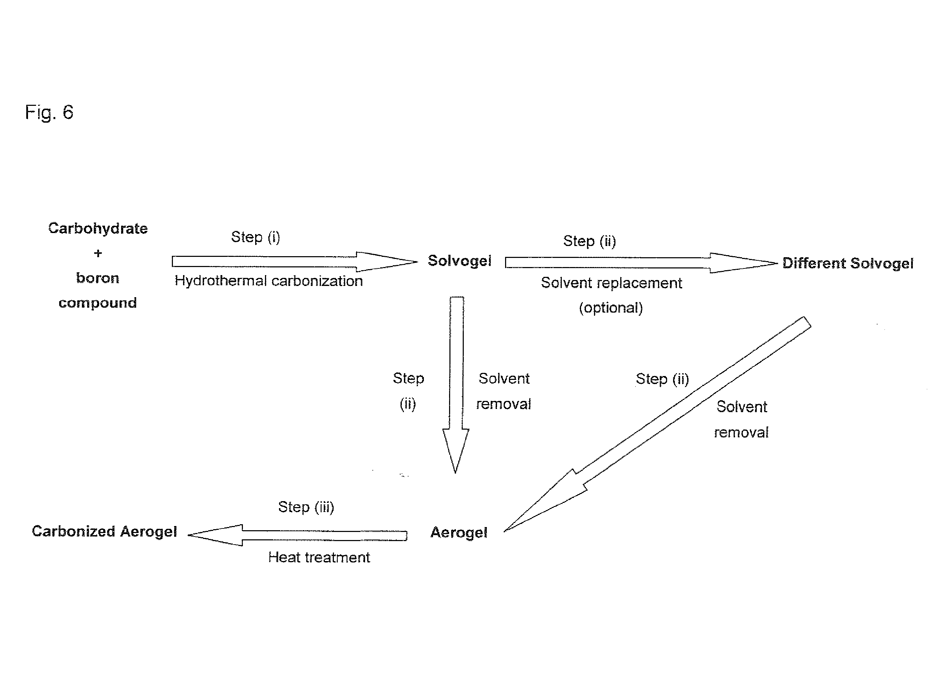

All steps of the preparation process of the invention and the particular carbon-containing materials obtained thereby, are illustrated in Fig. 6.

The heat treatment to yield carbonized aerogels was found to lead to a marginal dimensional shrinkage of the aerogel macrostructure while retaining the local nano-and microstructure (in terms of particle shape and connectivity). The overall particle size decreased slightly. The decreased particle size is associated with a higher specific surface area of the carbonized aerogel in comparison to its non-carbonized counterpart, i.e. the as-made aerogel. Also, as revealed by elemental analysis, the carbon content will be reduced during the heat treatment due to loss of oxygen and hydrogen.

The specific surface area of carbonized aerogels obtainable by the preparation process of the invention may be as large as up to 800 m²/g, for instance up to 500 m²/g. Moreover, the heat treatment will render the product more graphitic and hydrophobic than the as-made aerogel.

Both carbonized and as-made aerogels (collectively referred to as "aerogels") can be used in catalysis, in particular gas phase catalysis.

In sorption and chromatography, the aerogels can adsorb gases or moisture, similar to active carbon. As Carbogels, especially as-made aerogels, are more hydrophilic than active carbon, they show a higher absorbance for polar compounds.

The aerogels of the invention have thermal conductivities in the range of commercial polyurethane foams and can therefore be useful in heat or even sound insulation applications.

The Carbogels can be used as soil additive (terra preta). Due to their high specific surface area, the aerogels possess excellent uptake and storage capacities for water. In this connection, it should be noted that Seramis^{®} is only used due to its water uptake/storage performance. Carbogels could additionally provide plants with e.g. organic acids as fertilizers. Additionally there is the possibility to keep the boron compound, e.g. borax, in the Carbogel structure to obtain selective soil, as it sometimes acts as herbicide and sometimes not. This can be accomplished e.g. by not carrying out any washing steps in the preparation of the Carbogel.

The combination of high surface area, hierarchical pore structure and electrical conductivity leads to manifold possible electrochemical applications of the Carbogels, in particular aerogels of the invention, like supercapacitors, electrocatalysts, supports for electrocatalysts etc.

The hydrothermal, conditions in the preparation process of the invention renders accessible hybrid materials which are also of interest in electrochemical applications. For example, LiFePO₄ etc. could added to the reaction mixture to be subjected to step (i) of the preparation process of the invention to yield Carbogels with e.g. LiFePO₄ incorporated in the structure for use in Li-ion batteries. Inorganic compounds such as LiFePO₄ have high functionality but usually a lack of conductivity. A Carbogel hybrid material can combine the properties leading to optimized properties for *e.g.* energy storage and conversion.

The present invention will be further understood from the following examples, which are given by way of illustration and must not be construed in a limiting sense.

### EXAMPLES

### EXAMPLE 1

6.5 g D-Glucose (denoted as "Glu") and 0.2 g of borax were dissolved in 15 mL distilled water. The solutions were prepared in a quartz tube, then placed in a Teflon^{®} lined autoclave and sealed. The mixtures were then heated for 200 °C for 20 h under self-generated pressure in this closed system (hydrothermal treatment). The quartz tube contents solidified to yield a black-coloured mechanically stable monolith. The monolithic structure was washed with water and then with ethanol (3 x 50 ml for one day) to extract non-incorporated soluble compounds, in particular borax. After purification and solvent exchange with ethanol, the monolith was then dried using supercritical CO₂ extraction, resulting in 3.1 g (80 % carbon yield) low density (ρ ∼ 0.12 g/cm³) aerogel (Carbogel) of a brown colour. This is denoted as "Carbogel 1".

### EXAMPLE 2

The above Example 1 was repeated except that 0.5 g of borax was used in lieu of 0.2 g. In this case, the obtained monolithic aerogel product was of black colour. It is named "Carbogel 2" herein.

Using Transmission Electron Microscopy (TEM), the particle size of Carbogel 1 and Carbogel 2 were determined. The TEM image of Carbogel 1 is shown in Fig. 4a), and of Carbogel 2 in Fig. 4b). The particle diameter of Carbogel 1 was calculated as ∼50 nm while it was found to be smaller at -20 nm in the case of Carbogel 2. This is indicative of an overall decrease in particle size with an increasing ratio of borate to carbohydrate.

The TEM images, and also Scanning Electron Microscopy (SEM) images, reveal that the aerogel network is in both cases composed of monodisperse, aggregated, spherical nanoparticles generating a highly desirable hierarchical porous network.

### EXAMPLE 3

Carbogel 1 (obtained in Example 1) and Carbogel 2 (obtained in Example 2) were subjected to a heat-treatment under nitrogen at 900 °C (heating rate = 10 K min⁻¹ followed by an isothermal period of 1h) . The thus obtained samples are denoted as "Carbogel 1/900 °C" and "Carbogel 2/900 °C", respectively. The thermal treatment led to marginal dimensional shrinkage of the monolith macrostructure. The local nano- and microstructure in terms of particle shape and connectivity were also retained upon heating to this high carbonization temperature (as illustrated by TEM images; Fig. 4c) for Carbogel 1/900 °C; and Fig. 4d) for Carbogel 2/900 °C). Overall particle size was found only to slightly decrease upon carbonization, in accordance with the mass loss throughout carbonization. Elemental analysis indicates the loss of oxygen and hydrogen from the carbonaceous material structure, with carbon content increasing from 67 wt% to 90 wt% (see Table 1 below).

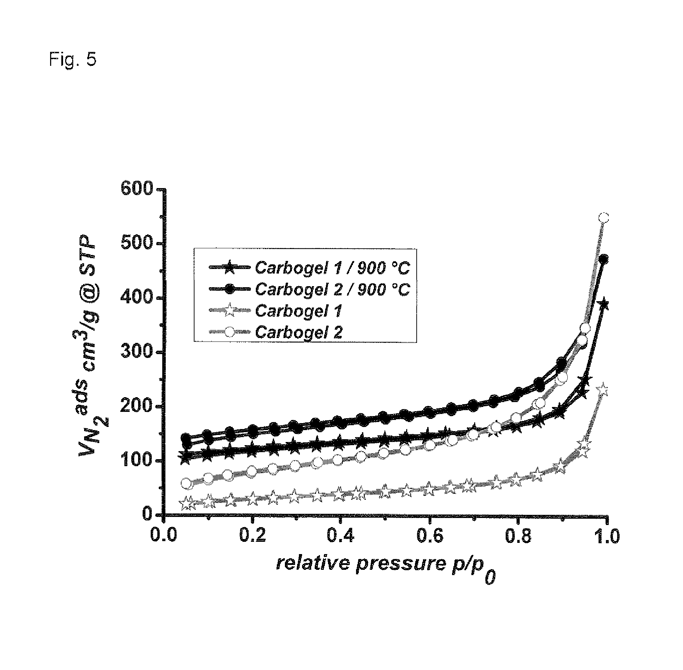

The sorption properties of all Carbogels obtained in Examples 1 to 3 are shown in Fig. 5. The marginal hysteresis and lack of defined plateau region as relative pressures reaches unity (i.e. p/p₀ ∼ 1) of the sorption profile, reflects a mixed ink bottle and slit-type mesoporous structuring, characteristic for the interstitial sites between the aggregated carbon nanoparticles. Shrinkage in the average pore diameter APD is observed for Carbogel 2 as compared to Carbogel 1, due to a smaller particle size, leading to a smaller average interparticle spacing (see Table 1 below). Finally the overall high gas volume at high pressures is the start of the action of large diameter mesoporosity and small diameter incorporated macroporosity, which can be expected given the material morphology as shown by SEM image analysis and the low overall density of these Carbogels. The as-prepared Carbogel 2 shows stronger gas uptake than for Carbogel 1, indicating a higher specific surface area due to the presence of smaller primary particle associations.

Carbogel 1/900 °C shows the same isotherm shape as Carbogel 1 indicating the almost retained gel-network structure at scales larger than 3 nm. In terms of specific surface areas (S_{BET}), heat treatment at 900 °C resulted in an increase from 180 m² g⁻¹ to 379 m² g⁻¹ for Carbogel 1, and from 280 m² g⁻¹ to 462 m² g⁻¹ for Carbogel 2, indicative of the generation of a greater micropore contribution.

**Table 1: N₂ sorption and elemental composition data for Carbogels prepared at 200 °C and heat treated at 900 °C.**

| **Sample Name** | **^{a}S_{BET}, m²g⁻¹** | **^{b}Vₜₒₜₐₗ, cm³g⁻¹** | **^{b}Vₘₑₛₒ, cm³g⁻¹** | **^{b}V_{micro}, cm³g⁻¹** | **^{b}_{APD}, nm** | **^{c}Carbon, wt. %** |
|---|---|---|---|---|---|---|
| Carbogel 1 | 180 | 0.20 | 0.18 | 0.02 | 2.76 | 65.9 |
| Carbogel 2 | 280 | 0.51 | 0.44 | 0.07 | 1.69 | 66.9 |
| Carbogel 1/900 °C | 379 | 0.81 | 0.67 | 0.14 | 1.73 | 89.5 |
| Carbogel 2/900 °C | 462 | 0.50 | 0.30 | 0.20 | 1.68 | 87.6 |
| ^{a}Specific Surface Area from BET method; | | | | | | |
| ^{b}Pore size characteristics obtained via the QSDFT model; | | | | | | |
| ^{c}Elemental Analysis. | | | | | | |

### EXAMPLE 4

To further illustrate the flexibility of the preparation process of the invention, Example 1 above was repeated except that 1.0 g of borax was used in place of 0.2 g. As evidenced by SEM and TEM analyses, the primary structure of the obtained carbon-containing material was even finer.

### EXAMPLE 5

When using, following the experimental protocol of Example 1 above, 3.25 g Glu and 1.0 g of borax, a carbon-containing material, having a density as low as 0.07 g cm⁻³ was obtained.

## Claims

1. A process for the preparation of carbon-containing material, which comprises the step (i) of heating a reaction mixture comprising an aqueous liquid and carbohydrate dissolved therein, **characterized in that** the reaction mixture further comprises, dissolved in the aqueous liquids, a boron compound selected from the group consisting of boric acid, derivatives thereof and salts thereof.

2. The process of Claim 1, wherein the boron compound is an alkali metal borate, preferably borax.

3. The process of Claim 1 or 2, wherein the carbohydrate is a monosaccharide, preferably selected from the group consisting of glucose and fructose.

4. The process of any one of Claims 1 to 3, wherein the aqueous liquid comprises an ionic liquid.

5. The process of any one of Claims 1 to 4, wherein the amount of carbohydrate with respect to the aqueous liquid is at least 10 wt.-% in the reaction mixture.

6. The process of any one of Claims 1 to 5, wherein step (i) is carried out at a temperature of ≤ 300 °C, preferably in the range of 130 to 300 °C.

7. The process of any one of Claims 1 to 6, wherein step (i) is carried out until solidification to give a solidified product.

8. The process of Claim 7, which further comprises the step (ii) of replacing the aqueous liquid in the solidified product with a non-aqueous liquid.

9. The process of Claim 8, wherein the non-aqueous liquid is an ionic liquid.

10. The process of Claim 7 or 8, which further comprises the step (ii) of removing the aqueous and/or non-aqueous liquid from the solidified product.

11. The process of Claim 10, wherein the aqueous and/or non-aqueous liquid, which is preferably selected from ethanol or acetone, is removed in step (ii) by supercritical drying.

12. The process of Claim 10 or 11, which further comprises a heat-treatment step (iii), which is preferably carried out at a temperature of ≥ 300 °C.

13. A carbon-containing material obtainable by the preparation process according to any one of Claims 1 to 12.

14. The carbon-containing material of Claim 14, which is in the form of a monolith.

15. A use of the carbon-containing material as defined in Claim 13 or 14 in catalysis, electrochemical applications, soil applications, sorption and chromatography.
